# EUROPEAN PATENT APPLICATION

(11) **EP 2 685 657 A1**
(43) Date of publication of application: **15.01.2014**
(21) Application number: 12005073.7
(22) Date of filing: 09.07.2012
(51) Int. Cl.: H04L 1/18

(54) **Method and apparatus for controlling a retransmission process by activating/deactivating the retransmission process dependent on channel quality**

(71) Applicant: MIMOON GmbH, 47057 Duisburg (DE)
(72) Inventor: Fu, Yuntao, 47057 Duisburg (DE)
(74) Representative: Eisenführ Speiser

(57) **Abstract**

The present invention relates to a method and apparatus for controlling a retransmission process on a transmission channel. A type of data service which uses the transmission channel is checked and a monitoring period, during which transmission quality of the data service on the transmission channel is monitored, is determined in response to the checking result. Then, a deactivation period is determined and the retransmission process is deactivated during the deactivation period if the monitored transmission quality meets at least one predetermined criteria during said monitoring period.

## Description

### FIELD OF THE INVENTION

The present invention relates to a method, apparatus and computer program product for controlling a retransmission process on a transmission channel, such as - but not limited to - an uplink or downlink channel of a wireless transmission system.

### BACKGROUND OF THE INVENTION

Retransmission, e.g. automatic repeat request (ARQ) or hybrid ARQ (HARQ), is the resending of data packets which have been either damaged or lost. It is a term that refers to one of the basic mechanisms used by protocols operating over a packet switched networks to provide reliable communication, such as for example the Transmit Control Protocol (TCP). Such networks are usually 'unreliable', meaning they offer no guarantees that they will not delay, damage, or lose data packets, or deliver them out of order. Protocols which provide reliable communication over such networks use a combination of acknowledgments (i.e. an explicit confirmation of receipt from the destination of the data packets), retransmission of missing and/or damaged data packets (usually initiated by a time-out), and checksums to provide reliability.

Thus, the retransmission process, function or feature, e.g., ARQ or HARQ, improves reliability in difficult propagation environments of communication system. It uses a stop and wait scheme. The next transport block can be transmitted only if an acknowledgement (ACK) from the other side has been received.

As an example, HARQ is used in High Speed Downlink Packet Access (HSDPA) and High Speed Uplink Packet Access (HSUPA) which provide high speed data transmission (on downlink and uplink, respectively) for mobile phone networks such as the Universal Mobile Telecommunications System (UMTS), and in the IEEE 802.16-2005 standard for mobile broadband wireless access, also known as "mobile WiMAX". It has also been used in 3GPP Long Term Evolution (LTE) system of fourth generation (4G) mobile communication.

However, in the above transmission systems, the retransmission process is enabled all the time, i.e., signaling overhead is always present. The acknowledgements corresponding to each transmission lead to a high signaling overhead. Especially if the mobile terminal (e.g. user equipment (UE)) does not move and the channel is good enough, in most cases nearly all transport blocks could be successfully decoded at the first transmission.

### SUMMARY OF THE INVENTION

It is an object of the present invention to provide an improved retransmission scheme with reduced signaling overhead.

This object is achieved by a method as claimed in claim 1, an apparatus as claimed in claim 7, and a computer program product as claimed in claim 14.

Accordingly, the type of data service which uses the transmission channel is checked, and a monitoring period, during which transmission quality of the data service on the transmission channel is monitored, is determined in response to the checking result. Then, a deactivation period is determined and the retransmission process is deactivated during the deactivation period if the monitored transmission quality meets at least one predetermined criteria during said monitoring period. A statistics-based decision can thus be used for deactivating or activating the retransmission process, so that status switching can be made reliable. The decision for deactivating or activating the retransmission process may be based on the user's quality of service (QoS) requirements.

Thereby, unnecessary signaling overhead can be avoided by the proposed retransmission control scheme in cases of sufficiently good channel conditions and packet loss or fault tolerant services.

According to a first aspect, the proposed checking may comprises checking if the data service allows a predetermined amount of data packet losses. Thereby, it can be assured that the retransmission process is only deactivated for data services which tolerate a certain amount of packet losses which might occur during the deactivation period.

According to a second aspect which can be combined with the first aspect, the at least one predetermined criteria may comprise as a first criterion whether all transmissions of the last active session of said data service have been acknowledged by the receiver and as a second criterion whether an average error rate on the transmission channel was greater than a predetermined error threshold. Thus, even if the data service tolerates a certain amount of packet losses, deactivation of the retransmission process is only initiated if current transmission quality is sufficient to allow such a deactivation.

According to a third aspect which can be combined with the first or second aspect, the deactivation period may be determined based on a received quality report (e.g. channel quality indicator (CQI) report) of the transmission channel. This allows easy implementation of the proposed control scheme in wireless systems, as CQI reports are already available there.

According to a fourth aspect which can be combined with any one of the first to third aspects, information about the deactivation of the retransmission process may be signaled to both transmission and reception sides of the transmission channel. This measure ensures that conflicts between transmitter(s) and receiver(s) are avoided.

According to a fifth aspect which can be combined with any one of the first to fourth aspects, the retransmission process may be reactivated if a maximum allowed number of radio frames has been reached or if the last reported channel quality of the transmission channel is less than a predetermined quality threshold. Thereby, any deterioration or degradation of channel quality leads to a reactivation of the retransmission process to avoid excessive packet losses.

The above features may be implemented as hardware circuits integrated on a single chip or chip set, or wired on a circuit board. As an alternative, at least parts of the features may be implemented as a software program or routine controlling a multi-tasking processor or computer device, e.g. a software-defined radio (SDR) implementation. As an example, the software program or routine may be implemented in C type programming language.

Other advantages, modifications are defined in the dependent claims.

### BRIEF DESCRIPTION OF THE DRAWINGS

The invention will now be described in greater detail based on embodiments with reference to the accompanying drawings in which:
Fig. 1 shows a schematic block diagram of a retransmission control device according to a first embodiment;
Fig. 2 shows a flow diagram of a retransmission control procedure according to a second embodiment; and
Fig. 3 shows a schematic block diagram of a software-based implementation according to a third embodiment.

### DESCRIPTION OF THE EMBODIMENTS

In the following, embodiments of the present invention will be described based on an adaptive channel estimation which may be applied in a transmitter or transceiver device of a wireless transmission system.

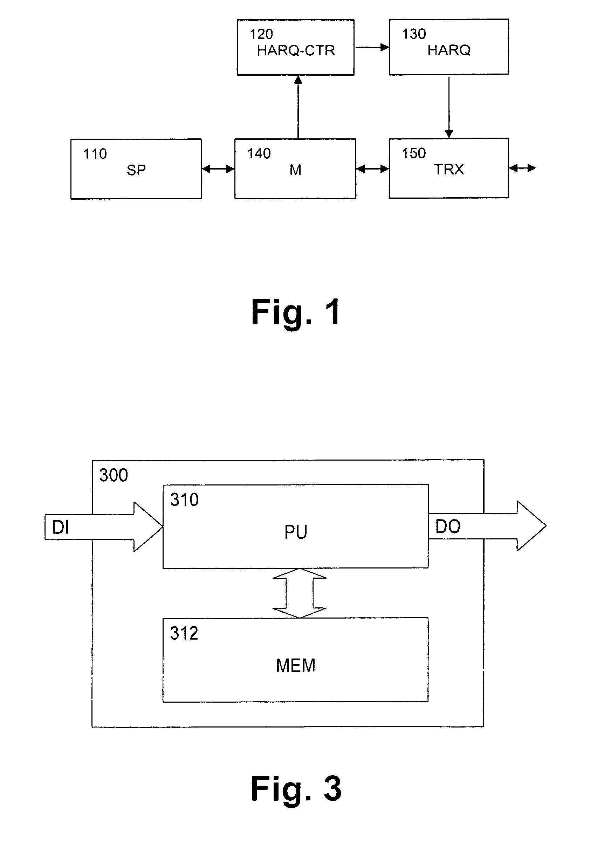

Fig. 1 shows a schematic block diagram of a retransmission control functionality or device according to a first embodiment. This functionality or device may be part of or integrated in a terminal device or access device of the wireless transmission system.

A transceiver (TRX) 150 is adapted to transmit and receive data packets via at least one transmission channel (not shown) of the wireless transmission system. Data packets to be transmitted are forwarded to the transceiver 150 via a monitoring function, unit or stage (M) 140 from a signal processing function, unit or stage (SP) 110 where the data packets have been processed (e.g. modulated, scrambled, coded, etc.) to carry desired information to be conveyed by the data packets. It is noted that the single block 110 may represent a plurality of blocks required for generating transmission data packets and for deriving information conveyed by received data packets.

The monitoring function, unit or stage 140 is adapted to check the type of data service to which the data packets to be transmitted via the monitored transmission channel(s) relate. Furthermore, the monitoring function, unit or stage 140 is adapted to check, evaluate or assess transmission quality, e.g., based on quality information signaled from the other transmission end or derived at the own transmission end or based on a determined error rate or a number of missing acknowledgements or any other channel quality determination or assessment scheme. To achieve this, a counter function for counting acknowledgements and/or a buffer memory for storing quality information may be provided in or used by the monitoring function, unit or stage 140.

When a new transmission is initiated, the monitoring function, unit or stage 140 checks the type of related data service and initiates a monitoring process during a predetermined monitoring period, if it determines that the related data service tolerates data losses in a sufficient manner. If the monitoring process has been initiated, error and/or quality thresholds are set for the monitored channel and data transmission with retransmission process is started. During the monitoring period, the monitoring function, unit or stage 140 monitors transmission quality. When the end of the monitoring period has been reached, transmission quality on the channel is assessed by the monitoring function, unit or stage 140. If sufficient quality has been determined, the length of a deactivation period is determined by the monitoring function, unit or stage 140 and a retransmission control function, unit or stage (HARQ-CTR) 120 is triggered by the monitoring function, unit or stage 140 to deactivate the retransmission process (e.g. HARQ process) of a retransmission function, unit or stage 130 which is coupled to or controls the transceiver 150. Thereby, transmission without acknowledgements is initiated for the determined deactivation period and the transceiver 150 does not wait for the receipt of any acknowledgements before transmitting the next data packet.

During the deactivation period, the monitoring function, unit or stage 140 may continue monitoring the transmission process as to any sign for a degradation or decrease of transmission quality. If the monitoring function, unit or stage 140 detects that the determined quality threshold is no longer reached or that the deactivation period has ended, it triggers the retransmission control function, unit or stage 120 reactivate the retransmission process.

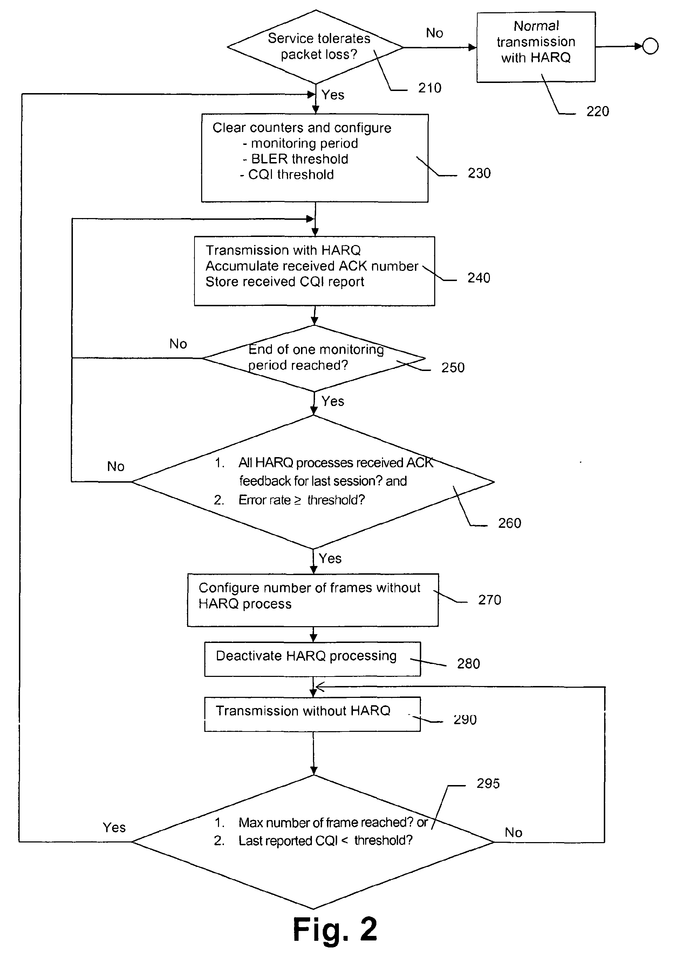

Fig. 2 shows a flow diagram of a retransmission control procedure according to a second embodiment for controlling a HARQ process.

In a first step 210 the type of the current data service is checked, to find out if a predetermined small amount of data packet loss could be accepted or not. If not, normal transmission with HARQ process is initiated in step 220 and the procedure ends. If step 210 determines that the required data packet loss is accepted by the current data service, counters are set to 0 and the following configuration parameters are configured in step 230.
- a monitoring period which indicates the number of sub-frames used to collect statistical data;
- a block error rate (BLER) threshold which can be chosen according to the service quality requirement; and
- a channel quality indicator (CQI) threshold which can be chosen according to the service quality requirement and which is to be used as the lower boundary of reported CQI used to reactivate the HARQ process.

Then, in step 240, normal transmission is performed, and an acknowledgement counter or counting function is incremented each time an acknowledgement is received and the reported CQI value is stored in a buffer.

In step 250, the end of the monitoring period is checked and normal transmission with HARQ keeps going on until the end of the monitoring period has been reached.

Thereafter, in step 260, it is checked whether the HARQ process can be deactivated or not. In order to deactivate the HARQ process, two conditions have to have been fulfilled during the monitoring period:
- all HARQ processes need to have received an acknowledgement from last active session, which means the previous transmissions have all been successful; and
- the average BLER value which is calculated by dividing the number of received by the total number of transmitted transport blocks has been greater than the required BLER threshold, so that the minimum service requirement has been satisfied.

If the two conditions have not been fulfilled, the procedure jumps back to step 240 and normal transmission with HARQ is continued for another monitoring period. If they have been fulfilled, then the number of radio frames without HARQ processing is determined in the subsequent step 270 based on the previously collected CQI report. With these values a rough prediction of the future channel can be achieved, using e.g. parabolic interpolation or other methods.

Then, in step 280, HARQ processing is disabled or deactivated. This status can be signaled to both transmitter and receiver in order to avoid any conflicts. As a consequence, retransmission without HARQ process begins in step 290. In the subsequent step 295, it is checked whether either of the following conditions is fulfilled:
- the maximum allowed number of radio frames without HARQ (deactivation period) has been reached; or
- the last reported CQI value is less than the CQI threshold, implying that the channel is not good enough to support non-HARQ transmission.

If one of these conditions is determined to be fulfilled, then the procedure jumps back to step 230 so that transmission without HARQ is aborted and the initial state is reached. Otherwise, the procedure jumps back to step 290 and transmission without HARQ is continued until one of the above conditions of step 295 has been fulfilled.

Fig. 3 shows a schematic block diagram of an alternative software-based implementation according to a second embodiment. The required functionalities can be implemented in a computer device 300 with a processing unit 310, which may be any processor or computer device supporting multi-tasking with a control unit which performs control based on software routines of a control program stored in a memory 312. The control program may also be stored separately on a ccmputer-resdable medium. Program code instructions are fetch from the memory 312 and are loaded to the control unit of the processing unit 310 in order to perform the functions of the steps or stages of Figs. 1 and 2, which may be implemented as the above mentioned software routines. The processing steps may be performed on the basis of input data DI and may generate output data DO. In the present interaction system, the input data DI may correspond to the type of data service and information about transmission quality of the monitored channel, and the output data DO may correspond to a control signal or information for deactivating/activating the retransmission process.

Consequently, the functionalities of the above embodiments may be implemented as a computer program product comprising code means for generating each individual step of the proposed adaptive channel estimation when run on a computer device or data processor.

In summary, a method and apparatus for controlling a retransmission process on a transmission channel have been described, wherein a type of data service which uses the transmission channel is checked and a monitoring period, during which transmission quality of the data service on the transmission channel is monitored, is determined in response to the checking result. Then, a deactivation period is determined and the retransmission process is deactivated during the deactivation period if the monitored transmission quality meets at least one predetermined criteria during said monitoring period.

This proposed retransmission control option can be applied to the downlink as well as the uplink direction. If applied to the uplink direction, a required decoding of the physical HARQ indicator channel could be skipped. If applied to the downlink direction, the resources reserved for the uplink control channel could be used by the data channel.

Furthermore, CQI report from downlink together with sounding measurement from uplink may be used to watch the current channel or transmission quality and decide if the HARQ process needs to be reactivated.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), digital signal processors (DSPs), general purpose processors (GPPs), programmable System on Chip (SoC) or other application specific programmable processors. The use of these technologies allows new wireless features and capabilities to be added to existing radio systems without requiring new hardware. Moreover, the invention is not restricted to wireless transmission systems and can be applied to any packet transmission system with retransmission process. The embodiments may thus vary within the scope of the attached claims.

## Claims

1. A method of controlling a retransmission process on a transmission channel, said method comprising:
a) checking (210) a type of data service which uses said transmission channel;
b) responsive to the result of said checking step, initiating (230) a monitoring period during which transmission quality of said data service on said transmission channel is monitored;
c) deciding (260) to deactivate said retransmission process if the monitored transmission quality meets at least one predetermined criteria during said monitoring period;
d) determining (270) a deactivation period and deactivating said retransmission process during said deactivation period in response to said decision step.

2. The method according to claim 1, wherein said checking step (210) comprises checking if said data service allows a predetermined amount of data packet losses.

3. The method according to claim 1 or 2, wherein said at least one predetermined criteria comprise as a first criterion whether all transmissions of the last active session of said data service have been acknowledged by the receiver and as a second criterion whether an average error rate on said transmission channel was greater than a predetermined error threshold.

4. The method according to any one of the preceding claims, wherein said deactivation period is determined based on a received quality report of said transmission channel.

5. The method according to any one of the preceding claims, further comprising signaling information about said deactivation of said retransmission process to both transmission and reception sides of said transmission channel.

6. The method according to any one of the preceding claims, wherein said retransmission process is reactivated if a maximum allowed number of radio frames has been reached or if the last reported channel quality of said transmission channel is less than a predetermined quality threshold.

7. An apparatus for controlling a retransmission process on a transmission channel, said apparatus comprising:
a) monitoring means (140) for checking a type of data service which uses said transmission channel and for initiating a monitoring period, during which transmission quality of said data service on said transmission channel is monitored, in response to the result of said checking; and
b) retransmission control means (120) for determining a deactivation period and deactivating said retransmission process during said deactivation period if the monitored transmission quality meets at least one predetermined criteria during said monitoring period.

8. The apparatus according to claim 7, wherein said monitoring means (140) are adapted to check if said data service allows a predetermined amount of data packet losses.

9. The apparatus according to claim 7 or 8, wherein said at least one predetermined criteria comprise as a first criterion whether all transmissions of the last active session of said data service have been acknowledged by the receiver and as a second criterion whether an average error rate on said transmission channel was greater than a predetermined error threshold.

10. The apparatus according to any one of claims 7 to 9, wherein said retransmission control means (120) are adapted to determine said deactivation period based on a received quality report of said transmission channel.

11. The apparatus according to any one of claims 7 to 10, wherein said apparatus is adapted to signal information about said deactivation of said retransmission process to both transmission and reception sides of said transmission channel.

12. The apparatus according to any one of claims 7 to 11, wherein retransmission control means (120) are adapted to reactivate said retransmission process if a maximum allowed number of received radio frames has been reached or if the last reported channel quality of said transmission channel is less than a predetermined quality threshold.

13. A transmitter device comprising an apparatus according to any one of claims 7 to 12.

14. A computer program product comprising code means for producing the steps of any one of claims 1 to 6 when run on a computing device.
